(19)

**Europäisches Patentamt**
**European Patent Office**
**Office européen des brevets**

(11) **EP 2 500 392 B1**

(12) **EUROPEAN PATENT SPECIFICATION**

(45) Date of publication and mention
of the grant of the patent:
**27.01.2016 Bulletin 2016/04**

(21) Application number: **10828385.4**

(22) Date of filing: **08.11.2010**

(51) Int Cl.:
*C09J 167/00* $^{(2006.01)}$    *C09J 7/02* $^{(2006.01)}$
*C09J 11/06* $^{(2006.01)}$

(86) International application number:
**PCT/JP2010/069866**

(87) International publication number:
**WO 2011/055827 (12.05.2011 Gazette 2011/19)**

(54) **PRESSURE-SENSITIVE ADHESIVE COMPOSITION**

DRUCKEMPFINDLICHE HAFTMITTELZUSAMMENSETZUNG

COMPOSITION ADHÉSIVE SENSIBLE À LA PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.11.2009 JP 2009256154**

(43) Date of publication of application:
**19.09.2012 Bulletin 2012/38**

(73) Proprietor: **Nitto Denko Corporation
Osaka 567-8680 (JP)**

(72) Inventors:
• **TAKAHIRA Hitoshi
Osaka (JP)**

• **YOSHIE Satomi
Osaka (JP)**

(74) Representative: **Müller-Boré & Partner
Patentanwälte PartG mbB
Friedenheimer Brücke 21
80639 München (DE)**

(56) References cited:
**JP-A- 9 143 446       JP-A- 11 106 494
JP-A- 57 053 580       JP-A- 2008 231 366
JP-A- 2009 007 429**

Remarks:
The file contains technical information submitted after the application was filed and not included in this specification

**Description**

The present invention relates to a pressure-sensitive adhesive containing a polyester as a base polymer and a pressure-sensitive adhesive composition that provides the pressure-sensitive adhesive.

A pressure-sensitive adhesive containing a polyester as a base polymer (hereinafter also referred to as polyester-based pressure-sensitive adhesive) has an advantage that higher heat resistance is easily realized as compared with a common pressure-sensitive adhesive containing an acrylic polymer as a base polymer (acrylic pressure-sensitive adhesive). As a technical document relating to the polyester-based pressure-sensitive adhesive, Patent Document 1 may be mentioned.

Patent Document JP 2009-007429 A discloses a pressure-sensitive adhesive composition, and laminated body formed by using pressure sensitive adhesive composition. ,

Patent Document 1: JP-A-6-145633

Recently, performance required for a pressure-sensitive adhesive has been increasingly sophisticated and, also in a polyester-based pressure-sensitive adhesive, it is desired to further improve adhesive force with maintaining good heat resistance thereof. However, in general, heat resistance (which may be evaluated by heat-resistant retention property to be mentioned later or the like) of a pressure-sensitive adhesive is a property antithetic to the adhesive force and thus it was difficult to achieve both of the properties at high levels.

An object of the present invention is to provide a pressure-sensitive adhesive composition that provides a polyester-based pressure-sensitive adhesive capable of realizing heat resistance and adhesive force at high levels in a balanced manner. A related another object is to provide a pressure-sensitive adhesive sheet having a polyester-based pressure-sensitive adhesive formed of such a composition.

The present invention provides a pressure-sensitive adhesive composition containing a polyester resin as a main component. The pressure-sensitive adhesive composition contains at least a polyester resin A having a weight-average molecular weight (Mw) of $4 \times 10^4$ to $12 \times 10^4$ and a polyester resin B having Mw of $0.3 \times 10^4$ to $1 \times 10^4$ as the polyester resin. Here, the molar ratio ($m_A:m_B$) of the number of moles $m_A$ of the polyester resin A contained calculated from the weight and weight-average molecular weight of the polyester resin A contained in the pressure-sensitive adhesive composition to the number of moles $m_B$ of the polyester resin B contained calculated from the weight and weight-average molecular weight of the polyester resin B contained in the pressure-sensitive adhesive composition may be 1:0.35 to 1:1.4. The pressure-sensitive adhesive composition further contains a crosslinking agent having two or more functional groups, which react at least one of the polyester resins A and B, in one molecule thereof. The gel fraction of the pressure-sensitive adhesive after crosslinking may be 30 to 65%. The pressure-sensitive adhesive composition of such a constitution contains polyester resins A and B each having the above Mw in a prescribed molar ratio and therefore, can form a pressure-sensitive adhesive (and further a pressure-sensitive adhesive sheet containing the pressure-sensitive adhesive, hereinafter the same) realizing both of heat resistance (for example, heat-resistant retention property) and adhesive force at higher levels after crosslinking.

In one preferable embodiment of the technique disclosed herein, glass transition temperature (Tg) of the pressure-sensitive adhesive after crosslinking is within the range of -70°C to -20°C. Such a pressure-sensitive adhesive composition can form a pressure-sensitive adhesive having higher performance.

As the crosslinking agent, a polyfunctional isocyanate having at least trifunctionality (that is, a compound having three or more of isocyanate group (-N=C=O group) in average per molecule) can be employed preferably. As a preferred crosslinking agent, an isocyanurate compound (trimeric adduct) of a polyfunctional isocyanate having at least difunctionality is exemplified. Moreover, an acid value of the polyester resin A and an acid value of the polyester resin B are preferably both 7 KOH mg/g or less (typically, 0 to 7 KOH mg/g).

In one preferable embodiment, the polyester resin A and the polyester resin B each contains a polycarboxylic acid component and a polyhydric alcohol component, and the combination of the polycarboxylic acid component and the polyhydric alcohol component constituting the polyester resin A is the same as the combination of the polycarboxylic acid component and the polyhydric alcohol component constituting the polyester resin B. Polyester resins A and B of such a relation can be excellent in compatibility. As a result, the pressure-sensitive adhesive composition of such a composition and the pressure sensitive-adhesive formed of the composition can exhibit more uniform and stable pressure-sensitive adhesive properties (heat-resistant retention property, adhesive force, and the like). Further, the pressure-sensitive adhesive composition of such a composition can form a pressure-sensitive adhesive having more excellent transparency.

As a polycarboxylic acid used in synthesis of one of or both of polyester resins A and B, an aliphatic dicarboxylic acid having a structure that unsaturated fatty acids are dimerized can be preferably employed. Further, as a polyhydric alcohol used in synthesis of one of or both of polyester resins A and B, an aliphatic diol having a structure that an aliphatic dicarboxylic acid resulting from dimerization of unsaturated fatty acids is subjected to hydrogen addition (hydrogenation) can be preferably employed. The pressure-sensitive adhesive composition of such a composition can form a pressure-sensitive adhesive having higher performance. Further, the above unsaturated fatty acid (for example, unsaturated fatty acids having 18 or more of carbon atoms) can be obtained from a plant. From the viewpoint of reducing environmental burden, it is preferred to utilize, as a raw material, an aliphatic dicarboxylic acid and/or aliphatic diol synthesized from such a plant-origin starting material (unsaturated fatty acid). In one preferable embodiment of the technique disclosed herein, the polyester resins A and B are both a polycondensate of a dimer acid with a dimer diol. The dimer acid and dimer diol are typically obtained and derived from a plant (in other word, they are plant-origin raw materials).

The present invention also provides a pressure-sensitive adhesive sheet having a pressure-sensitive adhesive layer formed of any of the pressure-sensitive adhesive composition disclosed herein. The pressure-sensitive adhesive constituting the pressure-sensitive adhesive layer has a gel fraction of 30 to 65%. Such a pressure-sensitive adhesive sheet can realize both of heat resistance (for example, heat-resistant retention property) and adhesive force at higher levels in a balanced manner.

[Fig. 1] Fig. 1 is a cross-sectional view schematically showing one constitutional example of the pressure-sensitive adhesive sheet according to the present invention.

[Fig. 2] Fig. 2 is a cross-sectional view schematically showing another one constitutional example of the pressure-sensitive adhesive sheet according to the present invention.

[Fig. 3] Fig. 3 is a cross-sectional view schematically showing the other one constitutional example of the pressure-sensitive adhesive sheet according to the present invention.

[Fig. 4] Fig. 4 is a cross-sectional view schematically showing the other one constitutional example of the pressure-sensitive adhesive sheet according to the present invention.

[Fig. 5] Fig. 5 is a cross-sectional view schematically showing the other one constitutional example of the pressure-sensitive adhesive sheet according to the present invention.

[Fig. 6] Fig. 6 is a cross-sectional view schematically showing the other one constitutional example of the pressure-sensitive adhesive sheet according to the present invention.

The following will explain a suitable embodiment of the present invention. Incidentally, an article which is other than the articles particularly referred to in the present description and is necessary for carrying out the present invention may be grasped as an article to be designed by one skilled in the art based on conventional technologies in the art. The present invention can be carried out based on the content disclosed in the present description and technical common wisdom in the art.

The pressure-sensitive adhesive composition in the technology disclosed herein is a pressure-sensitive adhesive composition containing a polyester resin as a main component (polyester-based pressure-sensitive adhesive composition). Here, the term "containing a polyester resin as a main component" means the fact that the amount of the polyester resin (in the case of containing two or more kinds of polyester resins, total amount of them) among solid components (nonvolatile components, i.e., components forming a pressure-sensitive adhesive) in the composition accounts for 50% by mass or more. Therefore, for example, a pressure-sensitive adhesive composition having a solid component concentration (NV) of 40% by mass where a pressure-sensitive adhesive-forming component containing 90% by mass or more of a polyester resin is dissolved in an organic solvent is included in the concept of the polyester-based pressure-sensitive adhesive composition mentioned herein. Incidentally, in the present description, "mass" means "weight".

Such a pressure-sensitive adhesive composition and the pressure-sensitive adhesive formed of the composition contain at least two polyester resins A and B different in weight-average molecular weight (Mw) from each other. Of these, the polyester resin A has a weight-average molecular weight (Mw) of $4 \times 10^4$ to $12 \times 10^4$, and preferably $5 \times 10^4$ to $8 \times 10^4$. When Mw of the polyester resin A is exceedingly larger than the above range, there is a case that the distance between crosslinking (interval between crosslinking points) becomes too long and the heat-resistant retention property of the pressure-sensitive adhesive tends to decrease. When Mw of the polyester resin A is exceedingly smaller than the above range, there is a case that the adhesive force tends to decrease. Moreover, the polyester resin B has Mw of $0.3 \times 10^4$ to $1 \times 10^4$, and preferably $0.4 \times 10^4$ to $0.7 \times 10^4$. When Mw of the polyester resin B is exceedingly larger than the above range, there is a case that the heat-resistant retention property of the pressure-sensitive adhesive tends to decrease. When Mw of the polyester resin B is exceedingly smaller than the above range, there is a case that the distance between crosslinking (interval between crosslinking points) becomes too short and the adhesive force tends to decrease.

Mw of the polyester resin A is preferably at least 5 times larger, more preferably at least 7 times larger, and particularly preferably at least 9 times larger than Mw of the polyester resin B. When the polyester resins A and B where respective Mw satisfies such a relation are used, an effect of using them in combination (typically, an effect of achieving both of heat resistance and adhesive force at high levels) can be more excellently exhibited. Without particular limitation, usually, it is suitable that Mw of the polyester resin A is controlled to at most 50 times (typically at most 40 times, for example, at most 25 times) Mw of the polyester resin B.

The blend ratio of the polyester resin A and the polyester resin B contained in the pressure-sensitive adhesive composition is in a range that a ratio (molar ratio $m_A:m_B$) of the number of moles $m_A$ of the polyester resin A contained therein to the number of moles $m_B$ of the polyester resin B contained therein is 1:0.35 to 1:1.4, and preferably 1:0.4 to 1:1.1. When the blend amount (blend ratio) of the polyester resin B relative to 1 mol of the polyester resin A is exceedingly smaller than 0.35 mol, the heat-resistant retention property of the pressure-sensitive adhesive is prone to decrease. When the blend ratio is exceedingly larger than 1.4, there is a case that the adhesive force of the pressure-sensitive adhesive tends to decrease. Incidentally, the number of moles $m_A$ of the polyester resin A contained means a value determined by dividing the weight $w_A$ of the polyester resin A contained in the pressure-sensitive adhesive composition by the weight-average molecular weight $Mw_A$ of the polyester resin A (i.e., $m_A = w_A/Mw_A$). Similarly, the number of moles $m_B$ of the polyester resin B contained means a value determined by dividing the weight $w_B$ of the polyester resin B contained in the pressure-sensitive adhesive composition by the weight-average molecular weight $Mw_B$ of the polyester resin B (i.e., $m_B = w_B/Mw_B$).

In this regard, Mw of the polyester resin herein means a value in terms of polystyrene determined by gel permeation chromatography (GPC) measurement for a sample prepared by dissolving the polyester resin in a suitable solvent (e.g., tetrahydrofuran). Specifically, Mw of the polyester resin can be determined by GPC measurement under conditions described in Examples to be mentioned later.

The fact that two or more polymers different in Mw (i.e., polymers containing at least polymers corresponding to the polyester resins A and B) are blended into the pressure-sensitive adhesive composition can be, for example, grasped by the fact that a molecular weight distribution having two or more elution peaks different in the position of the top point (i.e., bimodal or more) is observed on the GPC measurement. Each of the above two or more polymers typically shows a unimodal molecular weight distribution. By analyzing a molecular weight distribution curve (peak area) obtained by the above GPC measurement, a content ratio of the polymer corresponding to each peak can be determined.

In one preferable embodiment of the pressure-sensitive adhesive composition disclosed herein, the composition contains 2 to 12 parts by mass (more preferably 3 to 10 parts by mass, for example, 3 to 7 parts by mass) of the polyester resin B based on 100 parts by mass of the polyester resin A. Such a pressure-sensitive adhesive composition can form a pressure-sensitive adhesive achieving both of heat resistance (e.g., heat-resistant retention property) and adhesive force at high levels by crosslinking the composition appropriately (typically so as to attain a preferable gel fraction disclosed herein).

The acid value of the polyester resin A is preferably 7 KOH mg/g or less, more preferably 3 KOH mg/g or less, particularly preferably 1 KOH mg/g or less, and most preferably 0.5 KOH mg/g or less. The acid value of the polyester resin B is preferably 7 KOH mg/g or less, more preferably 1 KOH mg/g or less, particularly preferably 0.5 KOH mg/g or less, and most preferably 0.2 KOH mg/g or less. When the acid value of either the polyester resin A or B is exceedingly larger than 7 KOH mg/g, there is a case where the pressure-sensitive adhesive having a preferable gel fraction disclosed herein is difficult to be formed. In the pressure-sensitive adhesive composition containing a crosslinking agent which is a type of utilizing a crosslinking reaction of an isocyanate group, it is particularly effective to use the polyester resins A and B each satisfying the above acid value.

The measurement of the acid value can be performed by preparing a sample solution for titration where a polyester resin to be measured is dissolved in a concentration of about 0.5 to 2% by mass in an appropriate solvent containing water (a good solvent for the polyester resin to be measured is preferred and usually a mixed solvent of water and an organic solvent is used) and subjecting the solution to neutralization titration with an about 0.05N to 0.5N KOH solution (water or a mixed solvent of water and an organic solvent is used as a solvent). Specifically, for example, a value obtained by applying the acid value measurement method described in Examples to be mentioned later can be suitably employed as an acid value of the polyester resin disclosed herein.

Glass transition temperature (Tg) of the pressure-sensitive adhesive after crosslinking is preferably -70°C to -20°C, more preferably -65°C to -40°C, and particularly preferably -60°C to -50°C. When Tg is exceedingly lower than the above range, the cohesive force (as a result, the heat-resistant retention property) of the pressure-sensitive adhesive is sometimes prone to decrease. When Tg is exceedingly higher than the above range, the adhesive force (particularly, the adhesive force at a temperature range of room temperature or lower) and tackiness of the pressure-sensitive adhesive tend to decrease in some cases.

The above Tg can be typically determined as a temperature corresponding to the peak top of loss elastic modulus G" in the dynamic viscoelasticity measurement performed under a condition of a frequency of 1 Hz. Specifically, for example, a value obtained by applying the Tg measurement method described in Examples to be mentioned later can be suitably adopted as Tg in the technology disclosed herein.

The polyester resins A and B in the technology disclosed herein have each a structure that one or more compounds selected from polycarboxylic acids each having two or more carboxyl groups in one molecule thereof and derivatives thereof (i.e., polycarboxylic acid component) and one or more compounds selected from polyhydric alcohols each having two or more hydroxyl groups in one molecules thereof (i.e., polyhydric alcohol component) are condensed. As the above polycarboxylic acid derivatives, anhydrides, alkyl esters (monoesters, diesters, and the like may be included and esters with monoalcohols having 1 to 3 carbon atoms are preferred), and the like of the carboxylic acids can be used.

As constituting elements of the above polycarboxylic acid component, one or more compounds selected from various polycarboxylic acids generally known to be used for polyester synthesis and derivatives thereof can be used. As preferably usable polycarboxylic acids, there may be mentioned aliphatic or alicyclic dibasic acids and derivatives thereof (hereinafter sometimes referred to as "aliphatic or alicyclic dicarboxylic acids"). Specific examples thereof include adipic acid, azelaic acid, dimer acids, sebacic acid, 1,4-cyclohexanedicarboxylic acid, 1,3-cyclohexanedicarboxylic acid, 1,2-cyclohexanedicarboxylic acid, 4-methyl-1,2-cyclohexanedicarboxylic acid, dodecenylsuccinic anhydride, fumaric acid, succinic acid, dodecanedioic acid, hexahydrophthalic anhydride, tetrahydrophthalic anhydride, maleic acid, maleic anhydride, itaconic acid, and citraconic acid.

From the viewpoint of little environmental burden, as constituting elements of the polycarboxylic acid component, materials independent of petroleum (i.e., non-petroleum materials), particularly plant-origin materials can be preferably employed. This is also advantageous from the viewpoint of improving biomass ratio. As such plant-origin materials, dimer acids and sebacic acid are exemplified. In this regard, "dimer acids" herein means a dicarboxylic acid having a structure that unsaturated fatty acids are dimerized. A dicarboxylic acid having 36 carbon atoms which has a structure that unsaturated fatty acids having 18 carbon atoms (oleic acid, linoleic acid, linolenic acid, or the like) are dimerized is one typical example included in the above dimer acids.

As the other examples of the compound usable as constituting elements of the above polycarboxylic acid component, aromatic dibasic acids and derivatives thereof (anhydrides, alkyl esters, and the like; hereinafter sometimes referred to as "aromatic dicarboxylic acids") are mentioned. Specific examples of the aromatic dibasic acids include terephthalic acid, isophthalic acid, orthophthalic acid, 1,5-naphthalenedicarboxylic acid, 2,6-naphthalenedicarboxylic acid, 4,4'-diphenyldicarboxylic acid, 2,2'-diphenyldicarboxylic acid, and 4,4'-diphenylether dicarboxylic acid.

The polycarboxylic acid component in the technology disclosed herein may contain, for example, only one or two or more compounds belonging to aliphatic or alicyclic dicarboxylic acids, only one or two or more compounds belonging to aromatic dicarboxylic acids, or both of aliphatic or alicyclic dicarboxylic acid(s) and aromatic dicarboxylic acid(s). In the technology disclosed herein, preferable results can be realized by using only aliphatic or alicyclic dicarboxylic acid(s) (e.g., only aliphatic dicarboxylic acid(s)) as the polycarboxylic acid component. Alternatively, the aliphatic or alicyclic dicarboxylic acid(s) as a main component (component accounting for 50% by mass or more of the polycarboxylic acid component) and the aromatic dicarboxylic acid(s) in an amount where properties are not largely impaired may be used in combination.

Moreover, as constituting elements of the above polyhydric alcohol component, one or two or more compounds selected from various polyhydric alcohols generally known as those usable for polyester synthesis can be used. As preferably usable polyhydric alcohols, aliphatic or alicyclic diols are mentioned. Specific examples thereof include ethylene glycol, 1,2-propylene glycol, 1,3-propanediol, 2-methyl-1,3-propanediol, 1,2-butenediol, 1,3-butenediol, 1,4-butenediol, 1,5-pentanediol, 1,6-hexanediol, 3-methyl-1,5-pentanediol, neopentyl glycol, diethylene glycol, dipropylene grlycol, 2,2,4-trimethyl-1,5-pentanediol, 2-ethyl-2-butylpropanediol, 1,9-nonanediol, 2-methyloctanediol, and 1,10-decanediol.

From the viewpoint of little environmental burden, as constituting elements of the polyhydric alcohol component, non-petroleum materials, particularly plant-origin materials can be preferably employed. As such plant-origin materials, dimer diols and 1,4-butanediol are exemplified. In this regard, the "dimer diol" herein means a diol having a structure that the carboxyl groups in a dicarboxylic acid resulting from dimerization of unsaturated fatty acids are converted into hydroxyl groups. A diol having 36 carbon atoms which corresponds to a dimer of unsaturated fatty acids having 18 carbon atoms (oleic acid, linoleic acid, linolenic acid, or the like) is one typical example included in the above dimer diols.

Moreover, as the polyester resins A and B, those having no crosslinkable functional group other than the functional groups at both ends (typically either of hydroxyl group(s) and carboxyl group(s), respectively) can be preferably used. A polyester resin obtained by polycondensation of a dimer acid with a dimer diol is one preferable example included in the polyester resins having such a structure. The polyester resins A and B each having such a structure are preferable since the gel fraction can be easily controlled based on Mw and molar ratio (preferably, further the acid value) thereof.

In one preferable embodiment, the combination of the polycarboxylic acid component and the polyhydric alcohol component constituting the polyester resin A (the combination of the kinds of the compounds irrespective of the amount ratio of the compounds) is the same as the combination of the polycarboxylic acid component and the polyhydric alcohol component constituting the polyester resin B. The polyester resins A and B having such a relation may become excellent in compatibility. Therefore, according to the pressure-sensitive adhesive composition having such a composition, a pressure-sensitive adhesive showing more uniform and stable pressure-sensitive adhesive properties (heat-resistant retention property, adhesive force, etc.) and a pressure-sensitive adhesive more excellent in transparency can be formed.

In another preferable embodiment, 50% by mass or more, more preferably 75% by mass or more, and particularly preferably 90% by mass or more of the polycarboxylic acid component or polyhydric alcohol component constituting the polyester resin A is the same compound as the polycarboxylic acid component or polyhydric alcohol component constituting the polyester resin B. Substantially all (i.e., substantially 100% by mass) of the polycarboxylic acid component or polyhydric alcohol component constituting the polyester resin A may be the same compound as the polycarboxylic acid component or polyhydric alcohol component constituting the polyester resin B. Moreover, 50% by mass or more, more preferably 75% by mass or more, particularly preferably 90% by mass or more, and most preferably 100% by mass of each of the polycarboxylic acid component and polyhydric alcohol component constituting the polyester resin A is the same compound as the polycarboxylic acid component and polyhydric alcohol component constituting the polyester resin B, respectively. The polyester resins A and B having such a relation may become excellent in compatibility. Therefore, according to the pressure-sensitive adhesive composition having such a composition, a pressure-sensitive adhesive showing more uniform and stable pressure-sensitive adhesive properties (heat-resistant retention property, adhesive force, etc.) and a pressure-sensitive adhesive more excellent in transparency can be formed.

The polyester resins A and B in the technology disclosed herein can be obtained by polycondensation of the polycarboxylic acid component with the polyhydric alcohol component similarly to common polyester resins. More specifically, the polyester resins A and B can be produced (synthesized) by performing the condensation reaction of the carboxyl group of the polycarboxylic acid component with the hydroxyl group of the polyhydric alcohol component typically while removing water (condensation water) or the like formed by the condensation reaction to outside of the reaction system. As the method of removing the condensation water to outside of the reaction system, use can be made of a method of introducing an inert gas into the reaction system to remove the condensation water to the outside of the reaction system together with the inert gas, a method of removing the condensation water by distillation from the reaction system under reduced pressure (reduced pressure method), and the like. Owing to easy shortening of polymerization time and suitability for improving productivity, the above reduced pressure method can be preferably employed.

The reaction temperature when the condensation reaction is performed and the degree of reduced pressure (pressure in the reaction system) in the case where the reduced pressure method is employed can be appropriately set so that the polyester resin having desired properties (Mw, acid value, etc.) is efficiently obtained. Without particular limitation, usually, the reaction temperature can be suitably controlled to 180°C to 260°C, for example, 200°C to 220°C. When the reaction temperature is exceedingly lower than the above range, productivity is prone to decrease owing to low polymerization rate. On the other hand, when the reaction temperature is exceedingly higher than the above range, there is a concern that the formed polyester resin is deteriorated. Without particular limitation, usually, the degree of reduced pressure is suitably controlled to 10 kPa or lower (typically 10 kPa to 0.1 kPa) and, for example, can be controlled to 4 kPa to 1 kPa. When the pressure in the reaction system is exceedingly high, it becomes difficult to remove water formed by the condensation reaction effectively by distillation to the outside of the system and thus the polymerization rate is prone to lower. Moreover, in the case where the reaction temperature is relatively high, when the pressure in the reaction system is exceedingly low, there is a case where the polycarboxylic acid and the polyhydric diol as the starting materials are also removed by distillation to outside of the system, so that care must be taken. When the pressure in the reaction system is set exceedingly low, it becomes difficult to attain and maintain the pressure. Accordingly, it is preferred that the pressure in the reaction system is usually controlled to 0.1 kPa or higher.

In the condensation reaction, similarly to common polyester resins, known or conventional polymerization catalysts can be used. Examples of the polymerization catalysts include various metal compounds such as titanium-based, germanium-based, antimony-based, tin-based, and zinc-based ones; and strong acids such as p-toluenesulfonic acid and sulfuric acid. Of these, the use of titanium-based metal compounds (titanium compounds) is preferred. Specific examples of the titanium compounds include titanium tetraalkoxides such as titanium tetrabutoxide, titanium tetraisopropoxide, titanium tetrapropoxide, and titanium tetraethoxide, octaalkyl trititanate, hexaalkyldititanate, alkyl titanate, and titanium acetate.

The pressure-sensitive adhesive composition disclosed herein contains a crosslinking agent in addition to the polyester resins. The crosslinking agent is contained for controlling the gel fraction of the pressure-sensitive adhesive after crosslinking to the preferable gel fraction to be mentioned later. In the present invention, a polyfunctional compound having two or more functional groups in one molecule thereof is used as the crosslinking agent and the functional group reacts with the functional group at both ends of at least one of the polyester resins A and B of the present invention to form a crosslinked structure. The kind of the crosslinking agent is not particularly limited and a suitable one can be selected from conventionally known various crosslinking agents. For example, polyfunctional isocyanates (they mean compounds each having two or more isocyanate groups in average per molecule and include those having an isocyanurate structure), polyfunctional melamine compounds (methylated methylolmelamine, butylated hexamethylolmelamine, etc.), polyfunctional epoxy compounds (diglycidylaniline, glycerin glycidyl ether, etc.), polyfunctional oxazoline compounds, polyfunctional aziridine compounds, metal chelate compounds, and the like can be used. From the viewpoint of easy realization of the preferable gel fraction disclosed herein, polyfunctional isocyanates (e.g., polyfunctional isocyanates having an isocyanurate structure) can be preferably employed. The use of such a polyfunctional isocyanate is also preferred in view that a pressure-sensitive adhesive having high transparency is easily obtained.

As the polyfunctional isocyanate, one or two or more compounds selected from various isocyanate compounds having two or more isocyanate groups in one molecule thereof (polyisocyanates) can be used. Examples of such a polyfunctional isocyanate include aliphatic polyisocyanates, alicyclic polyisocyanates, and aromatic polyisocyanates.

Specific examples of the aliphatic polyisocyanates include 1,2-ethylene diisocyanate; tetramethylene diisocyanates such as 1,2-tetramethylene diisocyanate, 1,3-tetramethylene diisocyanate, and 1,4-tetramethylene diisocyanate; hexamethylene diisocyanates such as 1,2-hexamethylene diisocyanate, 1,3-hexamethylene diisocyanate, 1,4-hexamethylene diisocyanate, 1,5-hexamethylene diisocyanate, 1,6-hexamethylene diisocyanate and 2,5-hexamethylene diisocyanate; 2-methyl-1,5-pentane diisocyanate, 3-methyl-1,5-pentane diisocyanate, and lysine diisocyanate.

Specific examples of the alicyclic polyisocyanates include isophorone diisocyanate; cyclohexyl diisocyanates such as 1,2-cyclohexyl diisocyanate, 1,3-cyclohexyl diisocyanate, and 1,4-cyclohexyl diisocyanate; cyclopentyl diisocyanate such as 1,2-cyclopentyl diisocyanate and 1,3-cyclopentyl diisocyanate; hydrogenated xylylene diisocyanate, hydrogenated tolylene diisocyanate, hydrogenated diphenylmethane diisocyanate, hydrogenated tetramethylxylene diisocyanate, and 4,4'-dicyclohexylmethane diisocyanate.

Specific examples of the aromatic polyisocyanates include 2,4-tolylene diisocyanate, 2,6-tolylene diisocyanate, 4,4'-diphenylmethane diisocyanate, 2,4'-diphenylmethane diisocyanate, 2,2'-diphenylmethane diisocyanate, 4,4'-diphenylether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, 3,3'-dimethoxydiphenyl-4,4'-diisocyanate, xylylene-1,4-diisocyanate, and xylylene-1,3-diisocyanate.

As a crosslinking agent preferable for the present invention, polyfunctional isocyanates each having three or more isocyanate groups on average per molecule are exemplified. Such isocyanates each having at least trifunctionality may be multimers (typically dimers or trimers), derivatives (e.g., addition reaction products of a polyhydric alcohol with two or more molecules of the polyfunctional isocyanate), polymers, of isocyanates each having at least bifunctionality, and the like. For example, there may be mentioned polyfunctional isocyanates such as dimer or trimer of diphenylmethane diisocyanate, isocyanurate compound (trimer adduct having an isocyanurate structure) of hexamethylene diisocyanate, reaction products of trimethylolproptme with tolylene diisocyanate, reaction products of trimethylolpropane with hexamethylene diisocyanate, polymethylenepolyphenyl isocyanates, polyether polyisocyanates, and polyester polyisocyanates. By using such an isocyanate having at least trifunctionality as a crosslinking agent, good cohesive force can be exhibited and stabilization of crosslinking can be achieved. Additionally, the preferable gel fraction of the pressure-sensitive adhesive after crosslinking to be mentioned later can be more adequately (for example, stably with preventing an event that the gel fraction is insufficient) realized. The use of the polyfunctional isocyanate is also preferred in view that a pressure-sensitive adhesive having high transparency is easily obtained. An isocyanurate compound of the isocyanate having at least bifunctionality (e.g., hexamethylene diisocyanate) is particularly preferred.

As commercially available products of the polyfunctional isocyanates utilizable as a crosslinking agent in the technology disclosed herein, a trade name "Duranate TPA-100" manufactured by Asahi Kasei Chemicals Corporation, and a trade name "Colonate L", idem "Colonate HL", idem "Colonate HK", idem "Colonate HX", and idem "Colonate 2096" manufactured by Nippon Polyurethane Industry Co., Ltd., and the like are mentioned.

One kind of such crosslinking agents can be used singly or two or more kinds thereof can be used suitably in combination. The amount of the crosslinking agent to be used (in the case where a plurality of the crosslinking agents are used in combination, the total amount of them) based on 100 parts by mass of the polyester resin is usually suitably 20 parts by mass or less (typically 0.001 to 20 parts by mass), preferably 15 parts by mass or less, and more preferably 10 parts by mass or less. When the amount of the crosslinking agent to be used is too large, a desirable gel fraction cannot be achieved and the adhesive force of the pressure-sensitive adhesive obtained after crosslinking is prone to decrease. Moreover, usually, the amount of the crosslinking agent to be used based on 100 parts by mass of the polyester resin is suitably 0.01 parts by mass or more, preferably 0.1 parts by mass or more, and more preferably 1 part by mass or more. When the amount of the crosslinking agent to be used is too small, a desirable gel fraction cannot be attained and the cohesive force of the pressure-sensitive adhesive is insufficient, so that the heat-resistant retention property is prone to decrease. In the case where the polyfunctional isocyanate (typically isocyanate having at least trifunctionality) is used as a crosslinking agent, the amount described above may be particularly preferably applied.

In a typical embodiment of the technology disclosed herein, the gel fraction of the pressure-sensitive adhesive after crosslinking is 30 to 65%, and preferably 35 to 60%. Preferred is a pressure-sensitive adhesive composition constituted so as to provide a pressure-sensitive adhesive having such a gel fraction after crosslinking (for example, after applied, dried, and retained under the same conditions as in Examples to be mentioned later). Moreover, a pressure-sensitive adhesive sheet containing a pressure-sensitive adhesive having such a gel fraction is preferred. When the gel fraction of the pressure-sensitive adhesive is exceedingly smaller than the above range, the cohesive force is insufficient and the heat resistance (e.g., heat-resistant retention property) tends to decrease. When the gel fraction is exceedingly larger than the above range, the adhesive force is prone to decrease in some cases. The measurement of the gel fraction can be performed by the method described in Examples to be mentioned later. As a porous sheet to be used in the measurement, a trade name "NITOFLON (registered trademark) NTF1122" manufactured by Nitto Denko Corporation or a corresponding product thereof is preferably used.

In order to facilitate the realization of the above gel fraction, in addition to the above crosslinking agent (e.g., a polyfunctional isocyanate), a crosslinking catalyst for enhancing the crosslinking reaction of the crosslinking agent can be used. Examples of such a crosskinking catalyst include organometallic compounds such as tetraisopropyl titanate, tetra-n-butyl titanate, tin octylate, lead octylate, cobalt octylate, zinc octylate, calcium octylate, lead naphthenate, cobalt naphthenate, dibutyltin diacetate, dibutyltin dioctate, dibutyltin dilaurate, and dibutyltin maleate; basic compounds such as butylamine, dibutylamine, hexylamine, t-butylamine, ethylenediamine, isophoronediamine, imidazole, lithium hydroxide, potassium hydroxide, and sodium methylate; and acidic compounds such as p-toluenesulfonic acid, trichloroacetic acid, phosphoric acid, monoalkyl phosphate, dialkyl phosphate, a phosphoric acid ester of β-hydroxyethylacrylate, monoalkyl phosphite, and dialkyl phosphite. One kind of the crosslinking catalyst may be used singly or two or more kinds thereof may be used appropriately in combination.

The pressure-sensitive adhesive composition or pressure-sensitive adhesive disclosed herein may contain further one or two or more kinds of polyester resins (polyester resin C) which belongs to neither the polyester resin A nor B unless the effect of the present invention is not largely impaired. Usually, it is suitable to control the content of the polyester C (in the case of containing two or more kinds, total amount thereof) to 25% by mass or less, and preferably 10% by mass or less based on 100% by mass of the total amount of the polyester resins. The content of the polyester C may be 5% by mass and the pressure-sensitive adhesive composition may be a pressure-sensitive adhesive composition containing substantially no polyester resin C (i.e., the polyester resins are substantially composed of the polyester resins A and B alone). In this regard, in the pressure-sensitive adhesive composition and pressure-sensitive adhesive disclosed herein, two or more kinds of the polyester resin A or polyester resin B may be used.

Also, the pressure-sensitive adhesive composition or pressure-sensitive adhesive disclosed herein may contain a polymer component (polymer D) other than the polyester resins unless the effect of the present invention is not largely impaired. Such a polymer component may be, for example, an acrylic polymer, a natural rubber-based polymer, a synthetic rubber-based polymer, a silicone-based polymer, or the like. It is preferred to select a polymer component excellent in compatibility with the polyester resins. Usually, it is suitable to control the content of the polymer D to 25% by mass or less, and preferably 10% by mass or less based on 100% by mass of the whole polymer components contained in the pressure-sensitive adhesive-forming components (total amount of the polyester resins and the polymer D). The content of the polymer D may be 5% by mass and the pressure-sensitive adhesive composition may be a pressure-sensitive adhesive composition containing substantially no polymer D (i.e., the polyester components are substantially composed of the polyester resins alone).

The pressure-sensitive adhesive composition or pressure-sensitive adhesive disclosed herein can further contain a tackifying resin according to need. By appropriately combining the above crosslinking agent and tackifying resin, a pressure-sensitive adhesive more excellent in pressure-sensitive adhesive performance (e.g., adhesive force) and a pressure-sensitive adhesive composition that provides the pressure-sensitive adhesive can be obtained.

As the above tackifying resin, any conventionally known one can be used without particular limitation. Examples thereof include terpene-based tackifying resins, phenol-based tackifying resins, rosin-based tackifying resins, aliphatic petroleum resins, aromatic petroleum resins, copolymer petroleum resins, alicyclic petroleum resins, xylene resins, epoxy-based tackifying resins, polyamide-based tackifying resins, ketone-based tackifying resins, and elastomer-based tackifying resins. One kind of the tackifying resin can be used singly or two or more kinds thereof can be used in combination. From the viewpoint of improving the biomass ratio, it is particularly preferred to use a tackifying resin produced from a plant-origin raw material (e.g., a plant-origin rosin-based tackifying resin, terpene-based tackifying resin, or the like).

Examples of the rosin-based tackifying resins include unmodified rosins (raw rosins) such as gum rosins, wood rosins, and tall oil rosins; modified rosins obtained by modifying these unmodified rosins by hydrogenation, disproportionation, polymerization, or the like (hydrogenated rosins, disproportionated rosins, polymerized rosins, other chemically modified rosins, etc.); and other various rosin derivatives.

Specific examples of the terpene-based tackifying resins include terpene-based resins such as α-pinene polymers, β-pinene polymers, and dipentene polymers; and modified terpene-based resins resulting from modification (phenol modification, aromatic modification, hydrogenation modification, hydrocarbon modification, etc.) of these terpene-based resins. As the modified terpene resins, terpene-phenol-based resins, styrene-modified terpene-based resins, aromatic modified terpene-based resins, hydrogenated terpene-based resins and the like are exemplified.

Specific examples of the phenol-based tackifying resins include condensates of various phenols (e.g., phenol, m-cresol, 3,5-xylenol, p-alkylphenols, resorcin, etc.) with formaldehyde; resols obtained by an addition reaction of the above-mentioned phenols with formaldehyde under an alkali catalyst; novolaks obtained by a condensation reaction of the above-mentioned phenols with formaldehyde under an acid catalyst; and rosin-modified phenol resins obtained by adding phenol to rosins (unmodified rosins, modified rosins, derivatives thereof, etc.) under an acid catalyst, followed by thermal polymerization.

In the case of using the tackifying resin, the amount to be used is suitably 100 parts by mass or less (typically 0.1 to 100 parts by mass), preferably 50 parts by mass or less, and more preferably 30 parts by mass or less based on 100 parts by mass of the total amount of the polyester resins. The amount to be added may be 10 parts by mass or less or may be 5 parts by mass or less. A lower limit of the amount of the tackifying resin to be used is not particularly limited but usually, it is suitable to use it in an amount of 0.1 parts by mass or more and preferably 1 part by mass or more based on 100 parts by mass of the total amount of the polyester resins. When the amount to be used is too small, effect of the addition of the tackifying resin is difficult to obtain sufficiently. On the other hand, when the amount of the tackifying resin to be used is too large, the crosslinking reaction may be inhibited and a desired gel fraction may be difficult to obtain as well as the compatibility with the polyester resins may be insufficient and the adhesive force may tend to decrease.

In the pressure-sensitive adhesive or pressure-sensitive adhesive composition having composition containing the tackifying resin, from the viewpoint of obtaining a pressure-sensitive adhesive having a better heat-resistant retention property, it is preferred to use a tackifying resin having a softening point of 40°C or higher, more preferably 60°C or higher, and particularly preferably 80°C or higher. An upper limit of the softening point of the tackifying resin is not particularly limited but, from the viewpoint of easy availability and compatibility with the polyester resins, usually, the use of a tackifying resin having a softening point of 130°C or lower is preferred. Alternatively, the tackifying resin may not be used. Preferable one embodiment of the technology disclosed herein is a pressure-sensitive adhesive or pressure-sensitive adhesive composition having composition containing substantially no tackifying resin.

The above pressure-sensitive adhesive composition or the pressure-sensitive adhesive formed of the composition can contain, if necessary, common additives such as UV absorbents, light stabilizers, release regulators, plasticizers, softening agents, fillers, colorants (pigments, dyes, etc.), antiaging agents, and surfactants within the range where the effect of the present invention is not largely impaired.

The pressure-sensitive adhesive formed of the pressure-sensitive adhesive composition disclosed herein has a storage elastic modulus which is measured at 23°C under a condition of a frequency of 1 Hz using a dynamic viscoelasticity measurement apparatus of preferably $1\times10^4$ to $1\times10^7$ Pa, and more preferably $1\times10^5$ to $1\times10^6$ Pa. When the storage elastic modulus is exceedingly smaller than $1\times10^4$ Pa, the cohesive force (as a result, the heat-resistant retention property) of the pressure-sensitive adhesive layer is prone to decrease. When the storage elastic modulus is exceedingly larger than $1\times10^7$ Pa, the pressure-sensitive adhesive becomes too hard and the adhesive force tends to decrease.

The pressure-sensitive adhesive sheet to be provided by the present invention comprises a pressure-sensitive adhesive layer formed of any of the pressure-sensitive adhesive compositions disclosed herein. The pressure-sensitive adhesive sheet may be a pressure-sensitive adhesive sheet with a base material where the pressure-sensitive adhesive layer is present on one surface of a sheet-shaped base material (support), may be a pressure-sensitive adhesive sheet with a base material where the pressure-sensitive adhesive layer is present on both surfaces of the base material (double-coated pressure-sensitive adhesive sheet, typically double-coated pressure-sensitive adhesive tape), or may be a base material-less pressure-sensitive adhesive sheet wherein the pressure-sensitive adhesive layer is held on a release liner (which may be grasped as a sheet-shaped base material having a releasing surface) (i.e., a double-coated pressure-sensitive adhesive sheet having no support). The concept of the pressure-sensitive adhesive sheet herein can include those called a pressure-sensitive adhesive tape, a pressure-sensitive adhesive label, a pressure-sensitive adhesive film, and the like. In this regard, the pressure-sensitive adhesive layer is typically continuously formed but is not limited to such a form. For example, the layer may be a pressure-sensitive adhesive layer formed in a regular or random pattern such as dot-shaped or stripe-shaped one. Moreover, the pressure-sensitive adhesive sheet provided by the present invention may be roll-shaped one or sheet-fed one. Alternatively, the pressure-sensitive adhesive sheet may have any of forms resulting from further processing into various shapes.

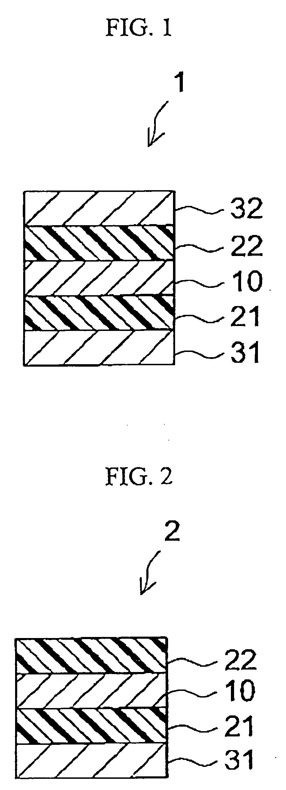

The pressure-sensitive adhesive sheet disclosed herein may have any of the cross-sectional structures schematically shown in Figs. 1 to 6. Of these, Fig. 1 and Fig. 2 are constitution examples of the double-coated pressure-sensitive adhesive-type pressure-sensitive adhesive sheet with a base material. The pressure-sensitive adhesive sheet 1 shown in Fig. 1 has a constitution that pressure-sensitive adhesive layers 21 and 22 are provided on both surfaces (both are non-releasable) of a base material 10 and the pressure-sensitive adhesive layers are protected with release liners 31 and 32 where at least the pressure-sensitive adhesive layer side is a releasable surface, respectively. The pressure-sensitive adhesive sheet 2 shown in Fig. 2 has a constitution that pressure-sensitive adhesive layers 21 and 22 are provided on both surfaces (both are non-releasable) of a base material 10 and one pressure-sensitive adhesive layer 21 of them is protected with a release liner 31 whose both surfaces are releasable surfaces. This type of the pressure-sensitive adhesive sheet 2 can have a constitution that the other pressure-sensitive adhesive layer 22 is also protected with the release liner 31 by winding the pressure-sensitive adhesive sheet to bring the pressure-sensitive adhesive layer 22 into contact with the back surface of the release liner 31.

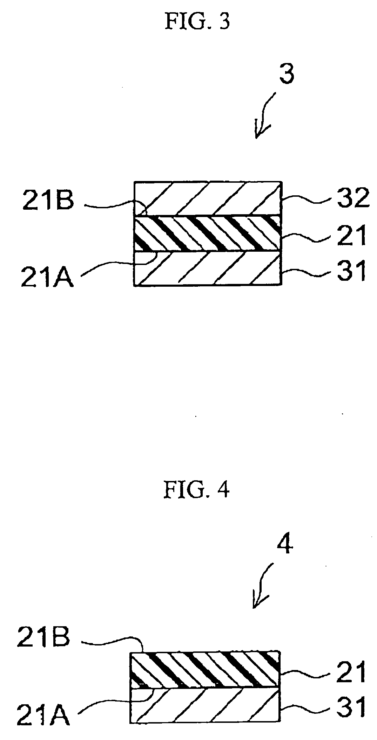

Fig. 3 and Fig. 4 are constitution examples of a base material-less double-coated pressure-sensitive adhesive sheet. The pressure-sensitive adhesive sheet 3 shown in Fig. 3 has a constitution that the both surfaces 21 A and 21B of the base material-less pressure-sensitive adhesive layer 21 are protected with release liners 31 and 32 where at least the pressure-sensitive adhesive layer side is a releasable surface. The pressure-sensitive adhesive sheet 4 shown in Fig. 4 has a constitution that one surface 21A of the base material-less pressure-sensitive adhesive layer 21 is protected with a release liner 31 whose both surfaces are releasable surfaces and, when wound, can have a constitution that another surface 21B of the pressure-sensitive adhesive layer 21 is also protected with the release liner 31 by bringing the other surface 21B into contact with the back surface of the release liner 31.

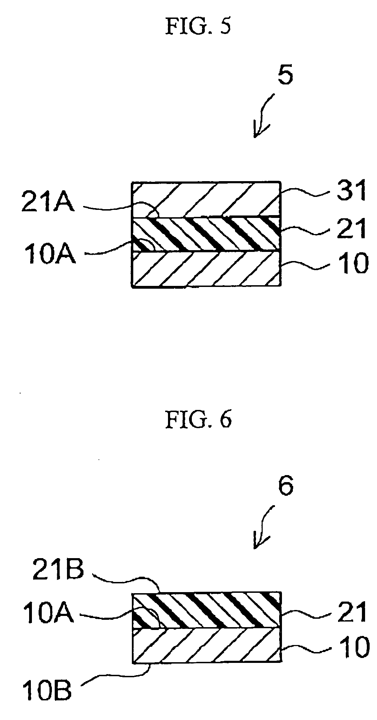

Fig. 5 and Fig. 6 are constitution examples of a single-coated pressure-sensitive adhesive-type pressure-sensitive adhesive sheet with a base material. The pressure-sensitive adhesive sheet 5 shown in Fig. 5 has a constitution that a pressure-sensitive adhesive layer 21 is provided on one surface 10A (non-releasable) of the base material 10 and the surface (adhesive surface) 21A of the pressure-sensitive adhesive layer 21 is protected with a release liner 31 where at least the pressure-sensitive adhesive layer side is a releasable surface. The pressure-sensitive adhesive sheet 6 shown in Fig. 6 has a constitution that a pressure-sensitive adhesive layer 21 is provided on one surface 10A (non-releasable) of the base material 10. Another surface 10B of the base material 10 is a releasable surface and, when the pressure-sensitive adhesive sheet 6 is wound, the surface 21B (adhesive surface) of the pressure-sensitive adhesive layer is protected with the other surface 10B of the base material by bringing the pressure-sensitive adhesive layer 21 into contact with the other surface 10B.

The thickness of the pressure-sensitive adhesive layer is not particularly limited and can be appropriately set according to uses of the pressure-sensitive adhesive sheet. For example, the thickness of the pressure-sensitive adhesive layer can be set to about 5 $\mu$m to 1000 $\mu$m, and usually, about 10 $\mu$m to 500 $\mu$m is preferable and about 20 to 200 $\mu$m is further preferable. The pressure-sensitive adhesive layer may be in a monolayer form or may be in a laminated form comprising two or more layers different in composition or shape (forming range, forming pattern, etc.). Moreover, an undercoat layer or an intermediate layer may be present between the base material and the pressure-sensitive adhesive layer unless the effect of the present invention is not largely impaired.

In the pressure-sensitive adhesive sheet disclosed herein, as the base material for supporting (backing) the pressure-sensitive adhesive layer, conventionally known various ones can be used. For example, use can be made of papers such as Japanese paper, kraft paper, glassine paper, high-quality paper, synthetic paper, and topcoat paper; fabrics such as single-spun or mixed-spun woven fabrics and nonwoven fabrics of fibrous materials (including natural fibers, semi-synthetic fibers, and synthetic fibers) such as cotton fiber, staple fiber, Manila hemp, pulp, rayon, acetate fiber, polyester fiber, polyvinyl alcohol fiber, polyamide fiber (Nylon fiber), polyolefin fiber (polypropylene fiber, polyethylene fiber, etc.), and acrylic fiber; plastic base materials such as plastic films and porous plastic sheets formed of various plastic materials such as polyolefins (low density polyethylene, medium density polyethylene, high density polyethylene, linear low density polyethylene, ethylene-$\alpha$-olefin copolymers, ethylene-vinyl acetate copolymers, ethylene-ethyl acrylate copolymers, ethylene-methyl methacrylate copolymers, ethylene-n-butyl acrylate copolymers, propylene homopolymer, propylene random copolymers, propylene block copolymers, etc.), polyesters (polyethylene terephthalate etc.), polyurethanes, vinyl chloride-based resins, vinyl acetate-based resins, polyimide-based resins, polyamide-based resins, fluorine-based resins, and cellophane; rubber sheets composed of natural rubber, butyl rubber, and the like; foamed sheets composed of foams such as foamed polyurethanes and foamed polychloroprene rubber; metal foils such as aluminum foil and copper foil; and composites thereof. The above plastic film may be non-stretched type or stretched type (uniaxially stretched type or biaxially stretched type). Moreover, in the case where the porous plastic sheet, nonwoven fabric, or the like is used as a base material, a non-porous base material such as a plastic film or sheet can be laminated on one surface thereof (typically a surface opposite to the surface on which the pressure-sensitive adhesive layer is formed, i.e., a back surface).

The above base material can contain various additives to be used for usual base materials (supports) for pressure-sensitive adhesive tapes, such as fillers (inorganic fillers, organic fillers, etc.), antiaging agents, antioxidants, UV absorbents, light stabilizers, antistatic agents, lubricants, plasticizers, and colorants (pigments, dyes, etc.) according to need. The surface of the base material (particularly, the surface at the side on which the pressure-sensitive adhesive layer is provided) may be subjected to conventional surface treatment usable for enhancing an anchoring property of the pressure-sensitive adhesive layer to the base material, for example, oxidation treatment by a chemical or physical method, such as treatment with chromic acid, exposure to ozone, exposure to flame, exposure to high-voltage electric shock, and treatment with ionized radiation ray or may be subjected to coating treatment with an undercoat agent. Moreover, in order to impart releasability against the pressure-sensitive adhesive layer, for example, coating treatment with a release-treating agent such as a silicone-based resin and a fluorine-based resin (release treatment) may be performed.

The thickness of the base material (support) can be appropriately selected according to the material and form thereof. For example, the thickness can be about 1 $\mu$m to 1000 $\mu$m. Usually, a base material having a thickness of about 2 $\mu$m to 500 $\mu$m is preferred, and the thickness is more preferably 3 $\mu$m to 300 $\mu$m, further preferably 5 $\mu$m to 250 $\mu$m, and particularly preferably 10 to 200 $\mu$m.

The formation of the pressure-sensitive adhesive layer can be performed in accordance with known methods for producing pressure-sensitive adhesive sheets. For examples, a method of directly applying a solution or a dispersion (typically emulsion) containing pressure-sensitive adhesive-forming components in an appropriate solvent or a hot-melt liquid of pressure-sensitive adhesive layer-forming components onto a base material (support) to form a pressure-sensitive adhesive layer; a method of applying the above solution, dispersion, hot-melt liquid, or the like onto a releasable surface of a base material (release liner) having a surface having releasability to form a pressure-sensitive adhesive layer and transferring (transcribing) the pressure-sensitive adhesive layer onto a support; a method of extruding pressure-sensitive adhesive layer-forming components onto a base material to form a pressure-sensitive adhesive layer; a method of forming a pressure-sensitive adhesive layer together with a base material layer containing a thermoplastic resin by bilayer or multilayer extrusion (co-extrusion) by an inflation process or a T-die process; and the like can be suitably employed. At the application, conventionally known coating machines such as a gravure roll coater, a reverse roll coater, a kiss roll coater, a dip roll coater, a bar coater, a knife coater, and a spray coater can be used.

As the release liner, conventionally known one can be used without particular limitation. A release liner having a constitution that a surface of the base material is subjected to release treatment can be suitably used. As the base material constituting this kind of release liner (base material for release liner), various plastic films (e.g., plastic films using, as starting materials, thermoplastic resins, for example, polyesters such as polyethylene terephthalate, polyolefins such as polypropylene and ethylene-propylene copolymers, polyvinyl chloride, and the like), papers, fabrics, rubber sheets, foam sheets, metal foils, composites thereof (e.g., sheets having a laminated structure, where olefin resins are laminated on both surfaces of a paper), and the like can be appropriately selected and used. The release treatment can be performed in a usual manner using known or conventional release-treating agents (e.g., silicone-based, fluorine-based, long alkyl-based release-treating agents). Moreover, a low adhesive base material such as an olefin-based resin (e.g., polyethylene, polypropylene, an ethylene-propylene copolymer, or a polyethylene/polypropylene mixture) or a fluorine-based polymer (e.g., polytetrafluoroethylene or polyvinylidene fluoride) may be used as a release liner without subjecting the surface of the base material to release treatment. Alternatively, one obtained by subjecting such a low adhesive base material to further release treatment may be used. Incidentally, the structure of the base material for a release liner may be a monolayer or may be a laminated structure having a plurality of layers. The thickness of the base material for a release liner can be appropriately selected according to purposes.

In an embodiment of the pressure-sensitive adhesive sheet of the present invention, it is preferred that the SUS adhesive force measured under the conditions described in Examples to be mentioned later is 8 N/20 mm or more and the heat-resistant retention property (heat-resistant retention temperature) measured under the conditions described in Examples to be mentioned later is 140°C or higher. In one preferable embodiment of the pressure-sensitive adhesive sheet disclosed herein, the SUS adhesive force is 10 N/20 mm or more and more preferably 12 N/20 mm or more, and the heat-resistant retention property is 140°C or higher. In one more preferable embodiment, the SUS adhesive force is 10 N/20 mm or more and the heat-resistant retention property is 160°C or higher. In another preferable embodiment, the SUS adhesive force is 8 N/20 mm or more and the heat-resistant retention property is 180°C or higher. The pressure-sensitive adhesive sheet having both of the adhesive force and the heat-resistant retention property at high levels as above can be preferably utilized in various fields.

At carrying out the present invention, it is not necessary to clarify the reason why the object of the present invention is attained by the above constitution but, for example, the following may be considered. Namely, in a common pressure-sensitive adhesive, when molecular weight of the polymer constituting the pressure-sensitive adhesive increases, cohesive force thereof generally tends to increase. However, in a polyester-based pressure-sensitive adhesive, usually, since it has a constitution that a desired cohesive force (it relates to heat resistance such as heat-resistant retention property) is achieved by reacting functional groups at both ends of the polyester (typically, hydroxyl group(s) and/or carboxyl group(s)) with a crosslinking agent, when a polyester resin having higher molecular weight is used, the heat resistance tends to decrease owing to long distance between crosslinking. Moreover, when a polyester resin having lower molecular weight is used, the adhesive force tends to decrease owing to short distance between crosslinking. As above, since the heat resistance and the adhesive force are in an antithetical relation, even when it is tried to balance the heat resistance and the adhesive force by simply controlling the molecular weight and/or the degree of crosslinking (gel fraction) of the polyester resin, it was difficult to achieve both performances at high levels. In the present invention, it is considered that a pressure-sensitive adhesive achieving both of the heat resistance (heat-resistant retention property) and the adhesive force at high levels, a pressure-sensitive adhesive composition which provides the pressure-sensitive adhesive, and a pressure-sensitive adhesive sheet comprising the pressure-sensitive adhesive are realized by intentionally selecting at least two polyester resins A and B different in Mw from each other and blending them in a prescribed molar ratio to attain an appropriate crosslinking.

Examples

The following will describe some Experimental Examples relating to the present invention but it is not intended to limit the present invention to such specific Examples. Incidentally, "part" and "%" in the following description are a mass standard unless otherwise stated. Moreover, individual properties in the following description were measured or evaluated by the following methods.

[Weight-Average Molecular Weight (Mw)]

After 0.01 g (solid content standard) of each polyester shown in Table 1 was weighed and then added to 10 g of tetrahydrofuran (THF), the whole was allowed to stand for 24 hours to dissolve the polyester. The THF solution was subjected to GPC measurement under the following conditions using a GPC apparatus, Model "HLC-8120GPC" manufactured by TOSOH Corporation to determined weight-average molecular weight (Mw) in terms of polystyrene.
GPC Measurement Conditions

Column: TSKgel G6000H6 manufactured by TOSOH Corporation
Column size: 7.5 mm in inner diameter $\times$ 30.0 cm in length
Eluent: tetrahydrofuran
Flow rate: 0.300 mL/minute
Column temperature: 40°C
Detector: RI (differential refractometer)
Sample injection amount: 20 $\mu$L

[Acid Value (AV)]

A mixed solvent containing toluene, isopropyl alcohol, and distilled water in a mass ratio of 50:49.5:0.5 was prepared. About 0.5 g (solid content standard) of each polyester shown in Table 1 was precisely weighed and then dissolved into 50 g of the mixed solvent to prepare a sample solution for titration. The sample solution was subjected to neutralization titration with 0.1N aqueous KOH solution using a titration apparatus, Model "COMTITE-550" manufactured by HIRANUMA Sangyo Corporation. From the obtained results, the acid value of each polyester was calculated according to the following expression (I).

$$\text{Acid Value [mg KOH/g]} = (a - b) \times 5.611 \times F/S \qquad (I)$$

wherein

a: amount [mL] of the aqueous KOH solution required for titration of the sample solution
b: amount [mL] of the aqueous KOH solution required for titration of blank (mixed solvent)
F: titer of the aqueous KOH solution
S: mass [g] of the polyester contained in the sample solution subjected to titration

[Glass Transition Temperature (Tg)]

Using a pressure-sensitive adhesive composition according to each Example, a disc-shaped measurement piece having a thickness of 3 mm and a diameter of 8 mm, which was composed of the pressure-sensitive adhesive after crosslinking, was prepared. The measurement piece was subjected to a dynamic viscoelasticity measurement in a measurement temperature range of -70°C to 200°C with imparting a shear vibration of a frequency of 1 Hz using a parallel plate on a dynamic viscoelasticity measurement apparatus "ARES" manufactured by Rheometric Scientific Inc. From the results, a temperature corresponding to peak top of loss elastic modulus G" was taken as Tg of the polyester resin according to each Example.

[Gel Fraction]

A pressure-sensitive adhesive sheet according to each Example was cut into a size of 5 cm $\times$ 5 cm together with the polyethylene terephthalate (PET) film. A pressure-sensitive adhesive layer (pressure-sensitive adhesive sample after crosslinking) alone was collected therefrom and wrapped with a tetrafluoroethylene resin-made porous sheet (average pore diameter: 0.2 $\mu$m, thickness: 0.2 mm) cut into an appropriate size (weight: $W_a$ mg) and the weight ($W_b$ mg) of the package was measured. By immersing the package in toluene and allowing it to stand at 23°C for 7 days, toluene-soluble content in the pressure-sensitive adhesive sample after crosslinking was extracted. Thereafter, the package was lifted up from the toluene and dried at 120°C for 2 hours and the weight ($W_c$ mg) of the package after drying was measured. By assigning respective values into the following expression:

$$\text{Gel Fraction [\%]} = (W_c - W_n)/(W_b - W_n) \times 100;$$

the gel fraction of the pressure-sensitive adhesive after crosslinking was calculated. As the tetrafluoroethylene resin-made porous sheet, a trade name "NITOFLON (registered trademark) NTF1122" manufactured by Nitto Denko Corporation was used.

[Adhesive Force]

The PET film covering one surface of the pressure-sensitive adhesive layer was peeled from the pressure-sensitive adhesive sheet according to each Example to expose a pressure-sensitive adhesive surface. Onto the pressure-sensitive adhesive surface, a PET film having a thickness of 25 μm, whose surface had been subjected to corona treatment, was attached to back the sheet. The backed pressure-sensitive adhesive sheet was cut into a strip having a width of 20 mm together with the PET film covering another surface of the pressure-sensitive adhesive layer to prepare a sample piece. The PET film covering the other surface of the pressure-sensitive adhesive layer was peeled from the sample piece and the exposed pressure-sensitive adhesive surface was press-adhered to a SUS304 stainless plate (adherend) by a method of reciprocating a 2 kg roller once. After 30 minutes from the attachment (press-adhesion), adhesive force (N/20 mm-width) against SUS was measured under conditions of a tension rate of 300 mm/minute and a tension angle of 180° (180° peeling method) using a tensile tester under measurement environment of a temperature of 23°C and a relative humidity of 50% in accordance with JIS C 2107.

[Heat-Resistant Retention Property]

The PET film covering one surface of the pressure-sensitive adhesive layer was peeled from the pressure-sensitive adhesive sheet according to each Example to expose a pressure-sensitive adhesive surface. Onto the pressure-sensitive adhesive surface, an aluminum sheet having a thickness of 90 μm was attached to back the pressure-sensitive adhesive sheet. The backed pressure-sensitive adhesive sheet was cut into a size having a width of 10 mm and a length of 100 mm together with the PET film covering the other surface of the pressure-sensitive adhesive layer to prepare three sample pieces per each Example (i.e., n = 3). The PET film covering the other surface of the pressure-sensitive adhesive layer was peeled from the sample piece and the exposed pressure-sensitive adhesive surface was press-adhered to a Bakelite plate (width: 25 mm, length: 125 mm, thickness: 2 mm) as an adherend in an adhesion area having a width of 10 mm and a length of 20 mm by a method of reciprocating a 5 kg roller once. After the sample piece thus attached to the adherend was allowed to stand for 30 minutes under a prescribed measuring temperature condition, a load of 500 g was imparted to a free end of the sample piece and the sample piece was allowed to stand for one hour under the same measuring temperature condition in a state that the load was imparted. The measuring temperature was changed to 80°C, 100°C, 120°C, 140°C, 160°C, and 180°C, and a maximum temperature at which all of three sample pieces were retained for 1 hour in a state that they were attached to the adherend per each Example was taken as heat-resistant retention temperature of the pressure-sensitive adhesive sheet according to the example.

<Synthesis of Polyester Resin A-1>

Into a reaction vessel equipped with a stirrer, a thermometer, and a cooler for elution were charged 100 parts of a dimer diol (trade name "PRIPOL 2033", Mw: 534, manufactured by Croda Japan), 106 parts of a dimer acid (trade name "PRIPOL 1009", Mw: 566, manufactured by Croda Japan), and, as a polymerization catalyst, 0.5 parts of titanium tetraisopropoxide (manufactured by Wako Pure Chemical Industries, Ltd., designated as "Ti(OiPr)$_4$" in Table 1). The whole was heated to 200°C while reducing the pressure in the vessel to 3 kPa and was maintained at the same temperature for 4 hours while distilling off water formed by a dehydrative condensation reaction. Thereafter, toluene was added to the reaction system to cool the system, thereby obtaining a toluene solution of a polyester resin A-1 (polyester concentration: 50%). Mw of the polyester resin A-1 was $10 \times 10^4$ and the acid value was 5 KOH mg/g.

<Synthesis of Polyester Resin A-2>

A toluene solution of a polyester resin A-2 (polyester concentration: 50%) was obtained in the same manner as in the case of the polyester resin A-1 except that the amount of the dimer acid charged based on 100 parts of the dimer diol was changed to 101 parts. Mw of the polyester resin A-2 was $6 \times 10^4$ and the acid value was 0.3 KOH mg/g.

<Synthesis of Polyester Resin A-3>

A toluene solution of a polyester resin A-3 (polyester concentration: 50%) was obtained in the same manner as in the case of the polyester resin A-1 except that the amount of the dimer acid charged based on 100 parts of the dimer diol was changed to 111 parts. Mw of the polyester resin A-3 was $6\times10^4$ and the acid value was 10 KOH mg/g.

<Synthesis of Polyester Resin B-1>

A polyester resin B-1 was obtained in the same manner as in the case of the polyester resin A-1 except that the amount of the dimer acid charged based on 100 parts of the dimer diol was changed to 59 parts and the operation of adding toluene to the reaction system after heating was not performed. Mw of the polyester resin B-1 was $0.6\times10^4$ and the acid value was 0.1 KOH mg/g.

As a polyester resin B-2, a hydroxyl group-double ended polyester polyol, a trade name "PRIPRAST 1838" (Mw: $0.2\times10^4$, acid value: 0.1 KOH mg/g) manufactured by Croda Japan was used.

For each polyester described in the above, the charging ratio at synthesis and physical properties were shown in Table 1.

[Table 1]

| Polyester resin | | A-1 | A-2 | A-3 | B-1 | B-2 |
|---|---|---|---|---|---|---|
| Charging ratio (parts) | PROPOL 2033 | 100 | 100 | 100 | 100 | - |
| | PROPOL 1009 | 106 | 101 | 111 | 59 | - |
| | PRIPLAST 1838 | - | - | - | - | 100 |
| | Ti(OiPr)$_4$ | 0.5 | 0.5 | 0.5 | 0.5 | - |
| Mw [$\times10^4$] | | 10 | 6 | 6 | 0.6 | 0.2 |
| Acid value [KOH mg/g] | | 5 | 0.3 | 10 | 0.1 | 0.1 |

<Example 1>

A polyester resin composition (pressure-sensitive adhesive composition) was obtained by blending, into the toluene solution of the polyester resin A-1, 6.0 parts of the polyester resin B-1 and 3.0 parts of a polyisocyanate-based crosslinking agent (trade name "DURANATE TPA-100" manufactured by Asahi Kasei Chemicals Corporation, an isocyanurate compound of hexamethylene diisocyanate, hereinafter designated as TPA-100) based on 100 parts of solid content of the polyester resin A-1. Two sheets of a PET film whose surface had been subjected to release treatment were prepared and the above composition was applied on the releasable surface of the first (one sheet of) PET film so as to attain a thickness after drying of 50 $\mu$m. After the applied article was dried at 100°C for 3 minutes, the releasable surface of the second PET film was attached to the pressure-sensitive adhesive surface (surface opposite to the first PET film) to protect the article. After keeping the article under an atmosphere of 50°C for 3 days, a pressure-sensitive adhesive sheet in a form that the pressure-sensitive adhesive layer having a thickness of 50 $\mu$m was sandwiched between the releasable surfaces of two sheets of the PET film was prepared.

<Example 2>

A polyester resin composition (pressure-sensitive adhesive composition) was obtained by blending, into the toluene solution of the polyester resin A-2, 4.0 parts of the polyester resin B-1, 3.0 parts of TPA-100, and, as a crosslinking aid, 0.1 parts of dioctyltin dilaurate (trade name "EMBILIZER OL-1" manufactured by Tokyo Fine Chemicals Co., Ltd., hereinafter designated as OL-1) based on 100 parts of solid content of the polyester resin A-2. A pressure-sensitive adhesive sheet according to Example 2 was prepared in the same manner as in Example 1 except that the composition was used.

<Example 3>

In Example 2, the blending amount of the polyester resin B-1 was changed to 5.0 parts and the blending amount of TPA-100 was changed to 1.5 parts based on 100 parts of the polyester resin A-2 (solid content), whereby a pressure-sensitive adhesive sheet according to Example 3 was prepared.

<Example 4>

In Example 3, the blending amount of TPA-100 was changed to 2.0 parts based on 100 parts of the polyester resin A-2 (solid content), whereby a pressure-sensitive adhesive sheet according to Example 4 was prepared.

<Example 5>

In Example 3, the blending amount of TPA-100 was changed to 2.5 parts based on 100 parts of the polyester resin A-2 (solid content), whereby a pressure-sensitive adhesive sheet according to Example 5 was prepared.

<Example 6>

In Example 2, the blending amount of the polyester resin B-1 was changed to 10.0 parts based on 100 parts of the polyester resin A-2 (solid content), whereby a pressure-sensitive adhesive sheet according to Example 6 was prepared.

<Example 7>

A pressure-sensitive adhesive sheet according to Example 7 was prepared in the same manner as in Example 5 except that the polyester resin B-1 was not used.

<Example 8>

A polyester resin composition (pressure-sensitive adhesive composition) was obtained by blending, into a toluene solution of the polyester resin B-1, 12.0 parts of TPA-100 and 0.1 parts of OL-1 based on 100 parts of solid content of the polyester resin B-1. A pressure-sensitive adhesive sheet according to Example 8 was prepared in the same manner as in Example 1 except that the composition was used.

<Example 9>

In Example 3, the blending amount of TPA-100 was changed to 1.0 part based on 100 parts of the polyester resin A-2 (solid content), whereby a pressure-sensitive adhesive sheet according to Example 9 was prepared.

<Example 10>

In Example 3, the blending amount of TPA-100 was changed to 3.0 parts based on 100 parts of the polyester resin A-2 (solid content), whereby a pressure-sensitive adhesive sheet according to Example 10 was prepared.

<Example 11>

In Example 2, the blending amount of the polyester resin B-1 was changed to 2.5 parts and the blending amount of TPA-100 was changed to 4.0 parts based on 100 parts of the polyester resin A-2 (solid content), whereby a pressure-sensitive adhesive sheet according to Example 11 was prepared.

<Example 12>

In Example 2, the blending amount of the polyester resin B-1 was changed to 15.0 parts based on 100 parts of the polyester resin A-2 (solid content), whereby a pressure-sensitive adhesive sheet according to Example 12 was prepared.

<Example 13>

A polyester resin composition (pressure-sensitive adhesive composition) was obtained by blending, into the toluene solution of the polyester resin A-1, 1.2 parts of the polyester resin B-2, 2.0 parts of TPA-100, and 0.1 parts of OL-1 based on 100 parts of solid content of the polyester resin A-1. A pressure-sensitive adhesive sheet according to Example 13 was prepared in the same manner as in Example 1 except that the composition was used.

<Example 14>

A polyester resin composition (pressure-sensitive adhesive composition) was obtained by blending, into the toluene solution of the polyester resin A-3, 5.0 parts of the polyester resin B-1, 15.0 parts of TPA-100, and 0.1 parts of OL-1 based on 100 parts of solid content of the polyester resin A-3. A pressure-sensitive adhesive sheet according to Example 14 was prepared in the same manner as in Example 1 except that the composition was used.

For these pressure-sensitive adhesive sheets, gel fraction, SUS adhesive force, and heat-resistant retention temperature were measured by applying the aforementioned methods. The results are shown in Table 2 and Table 3. In this regard, for the pressure-sensitive adhesive sheet according to Example 14, since the gel fraction was low, the SUS adhesive force and the heat-resistant retention temperature could not be measured.

[Table 2]

| Example | 1 | 2 | 3 | 4 | 5 | 6 |
|---|---|---|---|---|---|---|
| Polyester resin A-1 | 100 | - | - | - | - | - |
| A-2 | - | 100 | 100 | 100 | 100 | 100 |
| A-3 | - | - | - | - | - | - |
| B-1 | 6.0 | 4.0 | 5.0 | 5.0 | 5.0 | 10.0 |
| B-2 | - | - | - | - | - | - |
| TPA-100 | 3.0 | 3.0 | 1.5 | 2.0 | 2.5 | 3.0 |
| OL-1 | - | 0.1 | 0.1 | 0.1 | 0.1 | 0.1 |
| Molar ratio ($m_A:m_B$) | 1.0 | 0.4 | 0.5 | 0.5 | 0.5 | 1.0 |
| Tg [°C] | -60 | -53 | -53 | -53 | -53 | -51 |
| Gel fraction [%] | 55 | 58 | 38 | 47 | 58 | 43 |
| SUS adhesive force [N/20mm] | 10 | 8 | 13 | 10 | 9 | 10 |
| Heat-resistant retention temperature [°C] | 160 | 180 | 140 | 160 | 180 | 140 |

[Table 3]

| Example | 7 | 8 | 9 | 10 | 11 | 12 | 13 | 14 |
|---|---|---|---|---|---|---|---|---|
| Polyester resin A-1 | - | - | - | - | - | - | 100 | - |
| A-2 | 100 | - | 100 | 100 | 100 | 100 | - | - |
| A-3 | - | - | - | - | - | - | - | 100 |
| B-1 | - | 100 | 5.0 | 5.0 | 2.5 | 15.0 | - | 5.0 |
| B-2 | - | - | - | - | - | - | 1.2 | - |
| TPA-100 | 2.5 | 12.0 | 1.0 | 3.0 | 4.0 | 3.0 | 2.0 | 15.0 |
| OL-1 | 0.1 | 0.1 | 0.1 | 0.1 | 0.1 | 0.1 | 0.1 | 0.1 |
| Molar ratio ($m_A:m_B$) | 0 | - | 0.50 | 0.50 | 0.25 | 1.5 | 0.6 | 0.50 |
| Tg [°C] | -54 | -36 | -53 | -53 | -54 | -49 | -58 | - |
| Gel fraction [%] | 61 | 62 | 28 | 67 | 57 | 50 | 53 | 20 |
| SUS adhesive force [N/20mm] | 7 | 1 | 15 | 6 | 6 | 7 | 7 | - |
| Heat-resistant retention temperature [°C] | 120 | 180 | 80 | 100 | 120 | 120 | 120 | - |

As shown in these tables, pressure-sensitive adhesive sheets of Examples 1 to 6, each of which comprised a pressure-sensitive adhesive layer having a gel fraction of 30 to 65% and formed of a pressure-sensitive adhesive composition containing the polyester resin A having Mw of $4\times10^4$ to $12\times10^4$ and the polyester resin B having Mw of

$0.3 \times 10^4$ to $1 \times 10^4$ in a molar ratio ($m_A : m_B$) of 1:0.35 to 1:1.4, all had a SUS adhesive force of 8 N/20 mm or more and a heat-resistant retention property of 140°C or higher, that is the sheets achieved the antithetic properties of the adhesive force and the heat-resistant retention property simultaneously at high levels.

To the contrary, in Examples 7, 8, and 13 each having composition which lacked either the polyester resin A or B in the present invention, the adhesive force and the heat-resistant retention property could not simultaneously be achieved at high levels. More specifically, when the heat-resistant retention property was intended to secure, the adhesive force became insufficient (Example 8) and, when both of the adhesive force and the heat-resistant retention property were intended to achieve by adjusting the balance between the performances, the heat-resistant retention property could not be heightened from 120°C in the range where practically preferable adhesive force was secured (Examples 7 and 13). In Example 14 where the polyester resin A-3 having a high acid value was used, although the crosslinking agent TPA-100 was used in a larger amount, the gel fraction did not increase owing to low efficiency of the crosslinking reaction, so that a pressure-sensitive adhesive sheet durable to performance evaluation could not be obtained. Also, in both of the pressure-sensitive adhesive sheets having an exceedingly low gel fraction or an exceedingly high gel fraction (Example 9 and Example 10) and the pressure-sensitive adhesive sheets where the amount of the polyester resin B used was too small or too large relative to the polyester resin A (Examples 11 and 12), the adhesive force and the heat-resistant retention property could not simultaneously be achieved at high levels.

While specific examples of the present invention has been described in detail in the above, they are mere examples and do not limit the scope of Claims. The technologies described in Claims include various changes and modifications of the specific examples exemplified in the above.

The present invention is based on Japanese Patent Application (No. 2009-256154) filed on November 9, 2009, and the contents are incorporated herein by reference.

Since the pressure-sensitive adhesive composition of the present invention can realize heat resistance and adhesive force at high levels in a balanced manner, the composition is suitably used for pressure-sensitive adhesive tapes or pressure-sensitive adhesive sheets.

Description of Reference Numerals and Signs

1, 2, 3, 4, 5, 6: Pressure-sensitive adhesive sheet
10: Base material
21, 22: Pressure-sensitive adhesive layer
31, 32: Release liner

## Claims

1. A pressure-sensitive adhesive composition containing a polyester resin as a main component, which comprises at least a polyester resin A having a weight-average molecular weight of $4 \times 10^4$ to $12 \times 10^4$ and a polyester resin B having a weight-average molecular weight of $0.3 \times 10^4$ to $1 \times 10^4$ as the polyester resin, wherein a ratio ($m_A : m_B$) of the number of moles $m_A$ of the polyester resin A contained calculated from the weight and weight-average molecular weight of the polyester resin A contained in the pressure-sensitive adhesive composition to the number of moles $m_B$ of the polyester resin B contained calculated from the weight and weight-average molecular weight of the polyester resin B contained in the pressure-sensitive adhesive composition is 1:0.35 to 1:1.4, and wherein the pressure-sensitive adhesive composition further comprises a crosslinking agent having two or more functional groups, which react with at least one of the polyester resins A and B, in one molecule thereof, and a gel fraction of a pressure-sensitive adhesive after crosslinking is 30 to 65%, wherein the weight-average molecular weight and the gel fraction have been measured as defined in the description.

2. The pressure-sensitive adhesive composition according to claim 1, wherein glass transition temperature of the pressure-sensitive adhesive after crosslinking is -70°C to -20°C, wherein the glass transition temperature has been measured as defined in the description.

3. The pressure-sensitive adhesive composition according to claim 1 or 2, wherein the crosslinking agent is a polyfunctional isocyanate having at least trifunctionality.

4. The pressure-sensitive adhesive composition according to claim 3, wherein the polyfunctional isocyanate having at least trifunctionality is an isocyanurate compound of a polyfunctional isocyanate having at least difunctionality.

5.   The pressure-sensitive adhesive composition according to any one of claims 1 to 4, wherein acid value of the polyester resin A and acid value of the polyester resin B are both 7 KOH mg/g or less.

6.   The pressure-sensitive adhesive composition according to any one of claims 1 to 5,
     wherein the polyester resin A and the polyester resin B each contains a polycarboxylic acid component and a polyhydric alcohol component, and
     the combination of the polycarboxylic acid component and the polyhydric alcohol component constituting the polyester resin A is the same as the combination of the polycarboxylic acid component and the polyhydric alcohol component constituting the polyester resin B.

7.   The pressure-sensitive adhesive composition according to any one of claims 1 to 6,
     wherein the polyester resin A and the polyester resin B each contains a polycarboxylic acid component and a polyhydric alcohol component, and
     at least one polycarboxylic acid of the polycarboxylic acid component constituting the polyester resin A and the polycarboxylic acid component constituting the polyester resin B is an aliphatic dicarboxylic acid having a structure that unsaturated fatty acids are dimerized.

8.   The pressure-sensitive adhesive composition according to any one of claims 1 to 7,
     wherein the polyester resin A and the polyester resin B each contains a polycarboxylic acid component and a polyhydric alcohol component, and
     at least one polyhydric alcohol of the polyhydric alcohol component constituting the polyester resin A and the polyhydric alcohol component constituting the polyester resin B is an aliphatic diol having a structure that an aliphatic dicarboxylic acid resulting from dimerization of unsaturated fatty acids is hydrogenated.

9.   The pressure-sensitive adhesive composition according to any one of claims 1 to 8, wherein the polyester resins A and B are both a polycondensate of a dimer acid with a dimer diol.

10.  A pressure-sensitive adhesive sheet,
     which comprises a pressure-sensitive adhesive layer formed of the pressure-sensitive adhesive composition according to any one of claims 1 to 9, and wherein the pressure-sensitive adhesive constituting the pressure-sensitive adhesive layer has a gel fraction of 30 to 65%.


**Patentansprüche**

1.   Druckempfindliche Haftmittelzusammensetzung, enthaltend ein Polyesterharz als einen Hauptbestandteil,
     die mindestens ein Polyesterharz A mit einer gewichtsgemittelten Molekülmasse von $4 \times 10^4$ bis $12 \times 10^4$ und ein Polyesterharz B mit einer gewichtsgemittelten Molekülmasse von $0,3 \times 10^4$ bis $1 \times 10^4$ als das Polyesterharz umfasst,
     wobei ein Verhältnis ($m_A : m_B$) der Anzahl der Mole $m_A$ des enthaltenen Polyesterharzes A, berechnet aus dem Gewicht und der gewichtsgemittelten Molekülmasse des Polyesterharzes A, enthalten in der druckempfindlichen Haftmittelzusammensetzung, zu der Anzahl der Mole $m_B$ des enthaltenen Polyesterharzes B, berechnet aus dem Gewicht und der gewichtsgemittelten Molekülmasse des Polyesterharzes B, enthalten in der druckempfindlichen Haftmittelzusammensetzung, 1:0,35 bis 1:1,4 beträgt, und
     wobei die druckempfindliche Haftmittelzusammensetzung weiter ein Vernetzungmittel mit zwei oder mehr funktionellen Gruppen, welche mit mindestens einem der Polyesterharze A und B reagieren, in einem Molekül davon umfasst, und ein Gelanteil eines druckempfindlichen Haftmittels nach Vernetzen 30 bis 65% beträgt,
     wobei die gewichtsgemittelte Molekülmasse und der Gelanteil wie in der Beschreibung definiert gemessen wurden.

2.   Druckempfindliche Haftmittelzusammensetzung nach Anspruch 1, wobei die Glasübergangstemperatur des druckempfindlichen Haftmittels nach Vernetzen -70°C bis -20°C beträgt,
     wobei die Glasübergangstemperatur wie in der Beschreibung definiert gemessen wurde.

3.   Druckempfindliche Haftmittelzusammensetzung nach Anspruch 1 oder 2, wobei das Vernetzungsmittel ein polyfunktionelles Isocyanat mit mindestens Trifunktionalität ist.

4.   Druckempfindliche Haftmittelzusammensetzung nach Anspruch 3, wobei das polyfunktionelle Isocyanat mit mindestens Trifunktionalität eine Isocyanurat-Verbindung eines polyfunktionellen Isocyanats mit mindestens Difunktionalität ist.

**5.** Druckempfindliche Haftmittelzusammensetzung nach einem der Ansprüche 1 bis 4, wobei die Säurezahl des Polyesterharzes A und die Säurezahl des Polyesterharzes B beide 7 KOH mg/g oder weniger betragen.

**6.** Druckempfindliche Haftmittelzusammensetzung nach einem der Ansprüche 1 bis 5,
wobei das Polyesterharz A und das Polyesterharz B jeweils einen Polycarbonsäure-Bestandteil und einen mehrwertigen Alkohol-Bestandteil enthält, und
die Kombination des Polycarbonsäure-Bestandteils und des mehrwertigen Alkohol-Bestandteils, die das Polyesterharz A bilden, dieselbe ist wie die Kombination des Polycarbonsäure-Bestandteils und des mehrwertigen Alkohol-Bestandteils, die das Polyesterharz B bilden.

**7.** Druckempfindliche Haftmittelzusammensetzung nach einem der Ansprüche 1 bis 6,
wobei das Polyesterharz A und das Polyesterharz B jeweils einen Polycarbonsäure-Bestandteil und einen mehrwertigen Alkohol-Bestandteil enthält, und mindestens eine Polycarbonsäure des Polycarbonsäure-Bestandteils, der das Polyesterharz A bildet, und des Polycarbonsäure-Bestandteils, der das Polyesterharz B bildet, eine aliphatische Dicarbonsäure ist, die eine Struktur aufweist,
dass ungesättigte Fettsäuren dimerisiert vorliegen.

**8.** Druckempfindliche Haftmittelzusammensetzung nach einem der Ansprüche 1 bis 7,
wobei das Polyesterharz A und das Polyesterharz B jeweils einen Polycarbonsäure-Bestandteil und einen mehrwertigen Alkohol-Bestandteil enthält, und mindestens ein mehrwertiger Alkohol des mehrwertigen Alkohol-Bestandteils, der das Polyesterharz A bildet, und des mehrwertigen Alkohol-Bestandteils, der das Polyesterharz B bildet, ein aliphatisches Diol ist, das eine Struktur aufweist,
dass eine aliphatische Dicarbonsäure, die sich aus Dimerisierung der ungesättigten Fettsäuren ergibt, hydriert vorliegt.

**9.** Druckempfindliche Haftmittelzusammensetzung nach einem der Ansprüche 1 bis 8, wobei die Polyesterharze A und B beide ein Polykondensat einer Dimersäure mit einem Dimerdiol sind.

**10.** Druckempfindliche Haftmittelfolie,
die eine druckempfindliche Haftmittelschicht, gebildet aus der druckempfindlichen Haftmittelzusammensetzung nach einem der Ansprüche 1 bis 9, umfasst, und
wobei das druckempfindliche Haftmittel, das die druckempfindliche Haftmittelschicht bildet, einen Gelanteil von 30 bis 65% aufweist.

## Revendications

**1.** Composition adhésive sensible à la pression contenant une résine polyester comme un constituant principal,
laquelle comprend au moins une résine polyester A présentant une masse moléculaire moyenne en masse de 4 x $10^4$ à 12 x $10^4$ et une résine polyester B présentant une masse moléculaire moyenne en masse de 0,3 x $10^4$ à 1 x $10^4$ comme la résine polyester,
dans laquelle un rapport ($m_A$:$m_B$) du nombre de moles $m_A$ de la résine polyester A contenue calculé à partir de la masse et de la masse moléculaire moyenne en masse de la résine polyester A contenue dans la composition adhésive sensible à la pression au nombre de moles $m_B$ de la résine polyester B contenue calculé à partir de la masse et de la masse moléculaire moyenne en masse de la résine polyester B contenue dans la composition adhésive sensible à la pression est de 1:0,35 à 1:1,4, et
dans laquelle la composition adhésive sensible à la pression comprend de plus un agent de réticulation présentant deux ou plusieurs groupes fonctionnels, lesquels réagissent avec au moins une des résines polyesters A et B, dans une molécule de celui-ci, et une fraction de gel d'un adhésif sensible à la pression après réticulation est de 30 à 65 %,
dans laquelle la masse moléculaire moyenne en masse et la fraction de gel ont été mesurées comme défini dans la description.

**2.** Composition adhésive sensible à la pression selon la revendication 1, dans laquelle la température de transition vitreuse de l'adhésif sensible à la pression après réticulation est de -70°C à -20°C,
dans laquelle la température de transition vitreuse a été mesurée comme défini dans la description.

**3.** Composition adhésive sensible à la pression selon la revendication 1 ou 2, dans laquelle l'agent de réticulation est un isocyanate polyfonctionnel présentant au moins une trifonctionnalité.

**4.** Composition adhésive sensible à la pression selon la revendication 3, dans laquelle l'isocyanate polyfonctionnel présentant au moins une trifonctionnalité est un composé isocyanurate d'un isocyanate polyfonctionnel présentant au moins une difonctionnalité.

**5.** Composition adhésive sensible à la pression selon l'une quelconque des revendications 1 à 4, dans laquelle une valeur acide de la résine polyester A et une valeur acide de la résine polyester B sont toutes deux de 7 mg de KOH/g ou inférieure.

**6.** Composition adhésive sensible à la pression selon l'une quelconque des revendications 1 à 5, dans laquelle la résine polyester A et la résine polyester B contiennent chacune un constituant d'acide polycarboxylique et un constituant d'alcool polyvalent, et la combinaison du constituant d'acide polycarboxylique et du constituant d'alcool polyvalent constituant la résine polyester A est identique à la combinaison du constituant d'acide polycarboxylique et du constituant d'alcool polyvalent constituant la résine polyester B.

**7.** Composition adhésive sensible à la pression selon l'une quelconque des revendications 1 à 6, dans laquelle la résine polyester A et la résine polyester B contiennent chacune un constituant d'acide polycarboxylique et un constituant d'alcool polyvalent, et au moins un acide polycarboxylique du constituant d'acide polycarboxylique constituant la résine polyester A et du constituant d'acide polycarboxylique constituant la résine polyester B est un acide dicarboxylique aliphatique présentant une structure telle que des acides gras insaturés sont dimérisés.

**8.** Composition adhésive sensible à la pression selon l'une quelconque des revendications 1 à 7, dans laquelle la résine polyester A et la résine polyester B contiennent chacune un constituant d'acide polycarboxylique et un constituant d'alcool polyvalent, et au moins un alcool polyvalent du constituant d'alcool polyvalent constituant la résine de polyester A et du constituant d'alcool polyvalent constituant la résine de polyester B est un diol aliphatique présentant une structure telle qu'un acide dicarboxylique aliphatique résultant d'une dimérisation d'acides gras insaturés est hydrogéné.

**9.** Composition adhésive sensible à la pression selon l'une quelconque des revendications 1 à 8, dans laquelle les résines polyester A et B sont toutes deux un polycondensat d'un acide dimère avec un diol dimère.

**10.** Feuille adhésive sensible à la pression, laquelle comprend une couche adhésive sensible à la pression formée de la composition adhésive sensible à la pression selon l'une quelconque des revendications 1 à 9, et dans laquelle l'adhésif sensible à la pression constituant la couche adhésive sensible à la pression présente une fraction de gel de 30 à 65 %.

FIG. 1

FIG. 2

FIG. 3

FIG. 4

FIG. 5

FIG. 6

**EP 2 500 392 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009007429 A
- JP 6145633 A
- JP 2009256154 A